# EUROPEAN PATENT APPLICATION

(11) **EP 1 580 977 A2**
(43) Date of publication of application: **28.09.2005**
(21) Application number: 04013536.0
(22) Date of filing: 08.06.2004
(51) Int. Cl.: H04N 1/21

(54) **Method of managing and viewing image data**

(30) Priority: 24.03.2004 JP 2004085959
(71) Applicant: Hitachi, Ltd., Tokyo 101-8010 (JP)
(72) Inventor: Suzuki, Takayuki Hitachi, Ltd Intel.Prop.Grp, Chiyoda-ku Tokyo 100-8220 (JP); Morimoto, Yoshiaki Hitachi, Ltd Intel.Prop.Grp, Chiyoda-ku Tokyo 100-8220 (JP); Nakamoto, Yoichi Hitachi, Ltd Intel.Prop.Grp, Chiyoda-ku Tokyo 100-8220 (JP); Miyamoto, Hiroki Hitachi, Ltd Intel.Prop.Grp, Chiyoda-ku Tokyo 100-8220 (JP); Okasaki, Keitaro Hitachi, Ltd Intel.Prop.Grp, Chiyoda-ku Tokyo 100-8220 (JP); Okamura, Shinichiro Hitachi, Ltd Intel.Prop.Grp, Chiyoda-ku Tokyo 100-8220 (JP)
(74) Representative: Strehl Schübel-Hopf & Partner

(57) **Abstract**

A conventional method of organizing image data taken by a digital camera attaches to each data only information on date and time and position, without acquiring information related to content of the data. Therefore, positional information is obtained and attached to a data of image or text, and when storing the data, information related to the position is acquired based on the positional information and stored in association with the data. Related information is acquired when the data is viewed, also. A size of a data file is reduced with decreased size of information attached to the file. Acquiring the latest information as well as previous information upon data view is possible, since information related to the position of data creation is available in addition to information on the date and time and position, when storing and viewing the data. The acquired information enables detailed categorizing, searching and rendering data.

## Description

### BACKGROUND OF THE INVENTION

### Field of the Invention

The present invention relates to a method of obtaining additional information associated with a data created by a user. Description of Related Art

Recently, opportunities to take a picture with a digital camera and a mobile camera or built-in camera of mobile phone have increased. Since taking a picture using these information processing devices is easy, a large number of image files accumulate quickly and the user suffers from a difficulty in organizing and sorting out such piles of image files.

To deal with the problem, a method of attaching information such as date and time to an image data when the image data is captured has been proposed. As to digital cameras, there is widely used a data format called Exif which enables to store various information such as shutter speed and date and time. Further, some image formats are configured to be able to store additional information such as a comment.

In addition, there is known a method according to which positional information indicative of degrees of latitude and longitude of a location where an image data is captured is obtained by using the GPS system, and attaching the positional information to the image data. Such a method is disclosed in JP-A-2001-211364, for instance.

There is also known another method according to which positional information is attached to an image file at the point of the image taking operation, and other information such as vicinity information and advertisement is obtained on the basis of information specifying a person who took the image or information obtained by using the GPS or via a base station of mobile phone, and is included in the image file or is provided to the user. For example, JP-A-2002-344867 discloses such a method.

According to the method disclosed in JP-A-2002-344867, when a taken image is viewed, regional information obtained at the time of taking the image is provided and therefore only previous or obsolete information included in the image file is available, and it is impossible to access the latest information at the time of viewing the image data.

In addition, the conventional art has suffered from a drawback that the information processing device with a relatively small size of memory area, such as a mobile phone and digital camera, can not store a large volume of image data, in a case where the regional information obtained at the time of taking images is detailed and the amount of data representative of the regional information becomes enormous.

### SUMMARY OF THE INVENTION

Therefore, an object of the present invention is to provide a method and a system capable of attaching only minimum required information to a file such as of an image data, when creating the file, and providing a user other information based on the attached information.

According to this invention, additional information such as positional information is attached to a data such as an image and a note created with an information processing terminal, which may be a mobile phone or a digital camera. When the data is stored and viewed, information related to a position or place at which the data is created can be obtained on the basis of the additional information.

Thus, the invention enables to obtain the latest information related to a data, based on previous information on the data which has been obtained upon creation of the data.

### BRIEF DESCRIPTION OF THE DRAWINGS

Fig. 1 shows overall structure of a system according to one embodiment of the invention.
Fig. 2 is a diagram illustrating a processing flow of creating a data, obtaining positional information, and storing the data.
Fig. 3 is a diagram illustrating a processing flow implemented when the data is viewed.
Fig. 4 is an activity diagram illustrating a flow of events when a data is created with a mobile phone, by way of example, initiated with activation of a built-in camera of the phone.
Fig. 5 is an activity diagram illustrating a flow of events in the information processing terminal or the mobile phone and in a server, that operate in interaction with each other.
Fig. 6 shows a structure of a data transmitted from the information processing terminal to the server.
Fig. 7 is an activity diagram illustrating a flow of events in the information processing terminal when obtaining the positional information.
Fig. 8 is an activity diagram illustrating a flow of events when the server receives the data transmitted from the information processing terminal.
Fig. 9 is an activity diagram illustrating a flow of events when the information processing terminal acquires information from an information providing equipment.
Fig. 10 is an activity diagram illustrating a flow of events when the server obtains network position information of the information providing equipment.
Fig. 11 is an activity diagram illustrating a flow of events when the data is viewed.
Fig. 12 shows an example of how the data and its related information are displayed.
Fig. 13 shows a way of displaying the data and the related information.
Fig. 14 is a functional block diagram of the internal of the information processing terminal.
Fig. 15 is a conversion table used when location information is converted into network position information.

### DESCRIPTION OF THE PREFERRED EMBODIMENTS

Initially, a user operates an information processing device such as a digital camera and mobile phone to take a picture or make a document, so as to generate or create a data of a picture or a document. Additional information, such as positional information indicative of where the data is created, and the date and time when the data is created, is obtained and added or attached to the data. Then the data to which the additional information is attached is sent to a server to be stored therein. The term "server" refers to an information processing device for storing the data. For instance, the additional information is written in a comment section of the data in Exif format or other image formats. As means for obtaining the positional information, a positional-information obtaining equipment such as the GPS system or a base station of mobile phone may be employed. Thus, geographic information on the position at which the person creating the data is currently actually present can be obtained and attached to the data.

Hereinafter, the information indicative of the geographic position at which the data is created will be called "location information", which may be degrees of latitude and longitude.

In addition, a short range communication such as that through wireless LAN or infrared data communication may be used as means for obtaining the positional information. In this case, there is established by short range radio transmission a communication between the information processing device of the user and another information processing device which functions as an access point and is located near the user at the time of creating the data. The information processing device as the access point may be located at various places including: public institutions such as commercial facilities, community center and library, buildings in a leisure land such as amusement park, and tourist sites such as shrine and temple. From the information processing device functioning as the access point is obtained positional information such as the location information indicative of an actual location of each place or establishment where the access point is placed, or positional information in the form of URL (Uniform Resource Locator) and URI (Uniform Resource Identifier) each of which uniquely identifies each place or establishment in a wide area communications network such as the Internet. For instance, where the positional information is obtained through a wireless LAN, the information processing device functioning as the access point emits electric waves of the wireless LAN. In this case, the information processing device of the user merely needs to have a function to receive and process the electric waves of the wireless LAN; when the user comes within a reach of the electric waves, it is possible to connect his or her information processing device to the wireless LAN so as to make a communication therethrough. In another case where the positional information is obtained when the user passes through a particular place such as an entrance gate of an amusement park, transmission of the positional information is enabled by communication using RFID (Radio Frequency Identification) system or by infrared data communication. Further, the positional information may be obtained by reading a two-dimensional code, such as bar code, from a terminal the user carries.

Hereinafter, the positional information which identifies the position of the information processing device as the access point in the wide area communications network will be referred to as "network position information". Where the short range communication is available, the location information of the establishment can be obtained through the short range communication, in addition to the network position information.

Further, in the case where the short range communication is used to obtain the positional information, when an information processing device as a sender of the positional information (which device will be referred to as "information providing equipment") and the information processing device of the user are connected to the same network, it is possible for the information providing equipment to transmit the positional information to the information processing terminal of the user by broadcasting without identifying the user's terminal. In such a case, the information providing equipment may deliver other information than the positional information, e.g., publicity information such as regional information and advertisement, to the information processing device of the user. The information providing equipment includes a device, apparatus, facility, establishment or others which provides the information, and may be a school, concert hall or tourist spot, for instance.

Thus, the information processing device of the user can obtain location information in the case where the positional-information obtaining equipment such as the GPS is used, and can obtain network position information in the case where the short range communication with the information providing equipment possible through a wireless LAN for instance. When utilization of both of the positional-information obtaining equipment and short range communication is possible, or when the information providing equipment holds location information, too, the location information and network position information are both available. For instance, when the network position information can be obtained through a LAN and the information providing equipment holds location information also, the location information can be provided to the user's information processing device through the LAN. In addition, since a data of large volume representative of regional information, e.g. map, is not attached to the created data, the size of the data to which the location and/or network position information is attached is made relatively small.

The created data is stored in the server by being sent through, for instance, a wide area communications network such as the Internet, or a short range communications network such as a wireless LAN or an infrared communication link. Alternatively, the data may be stored in the server by first being stored in an external memory device, e.g., a flash memory, and then the external memory device being connected to the server to send the data to the server in which the data is stored. When storing the data, the server identifies the information providing equipment based on the location information or network position information attached to the data, collects information related to the position or place at which the data is created, and stores the data with associating the related information with the data. With the data, there are stored date-and-time information and positional information, i.e., location information and/or network position information. It is selected by the user whether to store information other than the above-indicated information with the data; it may be setup prior to the data creation, such that storing the other information is restricted as desired. Further, when the data is stored, information related to the positional information (e.g., Web information obtained on the basis of the URL) of the data is obtained and stored with the data. According to this arrangement, when the data is viewed later, the information related to the positional information which has been obtained at the time of storing the data can be viewed. The identifying the information providing equipment based on the positional information is performed by an information providing equipment identifier 90 described later.

In the case where the network position information is available as the positional information, it is easy to identify the information providing equipment, and in turn it is easy to obtain the information related to the position or place at which the data is created (which will be referred to as "information related to the positional information" hereinafter). The information related to the positional information may be information on stores in the vicinity of the position or place at which the data is created, advertisement of such stores, the weather when the data is created, etc.

On the other hand, in the case where only the location information is available as the positional information, a system or function for converting the location information into network position information is utilized. More specifically described, since degrees of latitude and longitude of the position or place where the data is created are obtained as the location information, the system or function provides network position information corresponding to an establishment located at the position represented by the degrees of latitude and longitude.

When the data is viewed, the information related to the positional information is also displayed, thereby providing the user a detailed information on the position or place at which the data has been created. When the user stores the data in the server, the information related to the positional data may be obtained and returned to the information processing terminal of the user, so as to make it possible to deliver information on the position or place at which the data has been just created.

As described above, according to the invention, location information and/or network position information is obtained when creating a data; and when the data is stored in the server, information related to the positional information is obtained. The information related to the positional information is stored or displayed with being associated with the created data. When the data is viewed, the data is displayed together with the information related to the positional information, and the latest information on the position or place at which the data has been created, as obtained on the basis of the location information or network position information. Thus, it is made possible to provide advertisements or latest information related to the time or position when or where the data has been created.

There will be described in detail one embodiment of the present invention. It is to be understood that the invention is not limited to the details of the embodiment as described below.

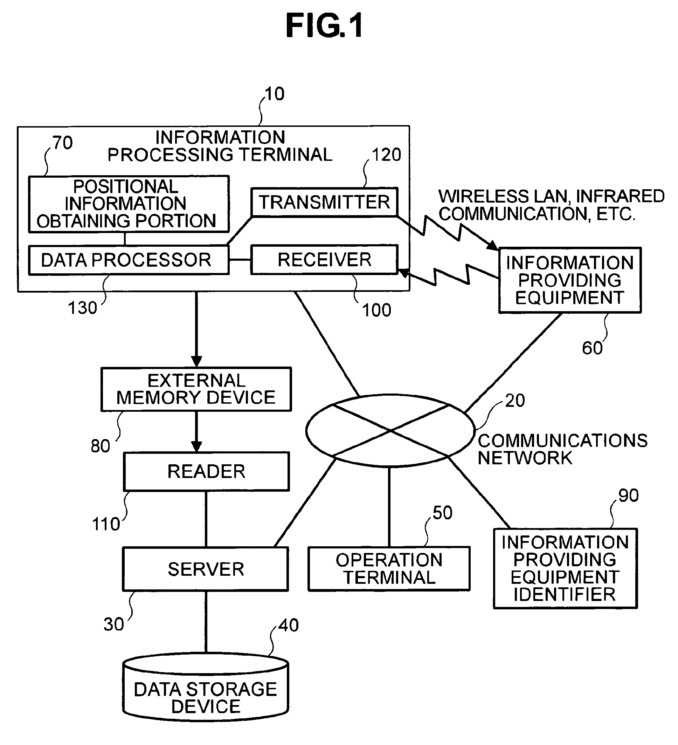

Fig. 1 is an overall view of a structure of a system according to the embodiment. The system comprises: an information processing terminal 10 comprising a receiver 100 and a transmitter 120 which respectively receives and sends data from and to the information providing equipment 60, a data processor 130 which controls such data and generates new data, and a positional information obtaining portion 70 which acquires positional information from a positional information transmitter (e.g. , the GPS system and a base station of mobile phone); an information providing equipment 60; a server 30 which receives information transmitted from the information processing terminal 10; a data storage device 40 which stores data; an operation terminal 50 through which the server 30 is operated by an operator or user; a communications network 20 through which information is transmitted/received, such as the Internet; an external memory device 80 which may be constituted by a flash memory (e.g., SD card and memory stick); a reader 110 which enables the server 30 to read in data stored in the external memory device 80; and an information providing equipment identifier 90. It is noted that the data storage device 40 may be integrated into the server 30. The information- providing-equipment identifier 90 provides means for the server 30 identifying the information providing equipment 60 based on location information. The information-providing-equipment identifier 90 may take the form of a server which supplies information, and is placed in or connected to the communications network 20. It is noted that this embodiment is practicable without the information-providing-equipment identifier 90. The information processing terminal 10 may be a mobile phone, PDA, or digital camera, while the operation terminal 50 may be a TV, PC, mobile phone, or PDA.

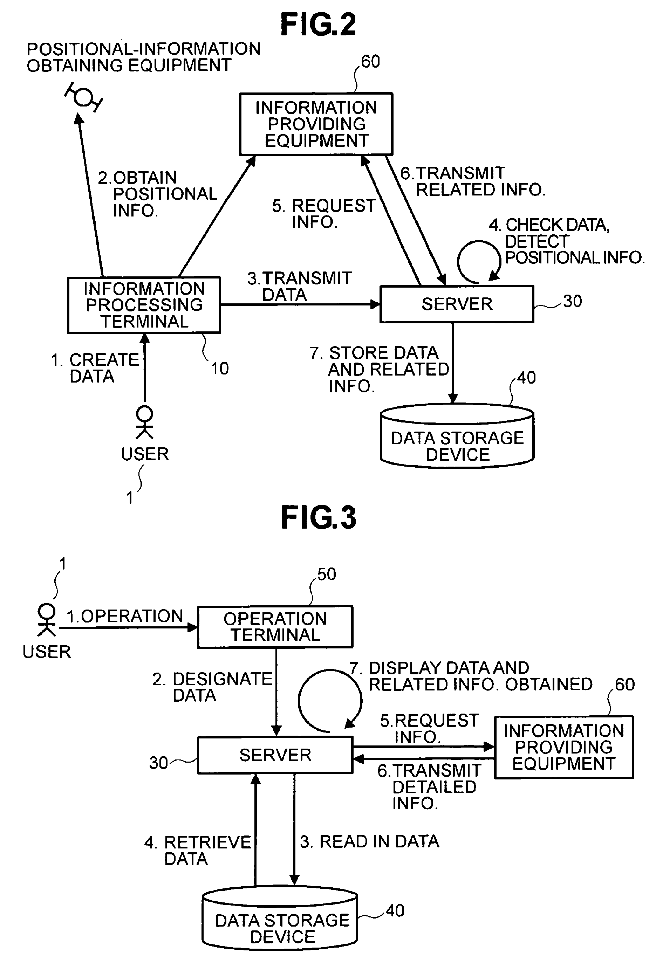

Description of the embodiment is generally constituted by two parts, namely, one part regarding processing implemented when a data is created and stored, the other part regarding processing implemented when the data is viewed. Fig. 2 shows a flow of the processing implemented when creating and storing a data, while Fig. 3 shows a flow of the processing implemented when the data is displayed and viewed. There will be first described, by reference to Fig. 2, how positional information is obtained when a data is created, how the data is stored, and how information related to the positional information is obtained.

The following is description of the processing for obtaining location information and network position information implemented when the data is created.

When the user creates a data, for instance, takes a picture or makes a note, with the information processing terminal 10, the terminal 10 communicates with the positional information transmitter such as the GPS system (or satellites thereof) or base station of mobile phone, or with the information providing equipment 60, or alternatively with both of them, to obtain the location information and/or network position information. The location information is obtained from the positional information transmitter via the positional information obtaining portion 70.

The network position information can be obtained according to any of the methods described below. Once the network position information is obtained, the information providing equipment 60 can be identified.

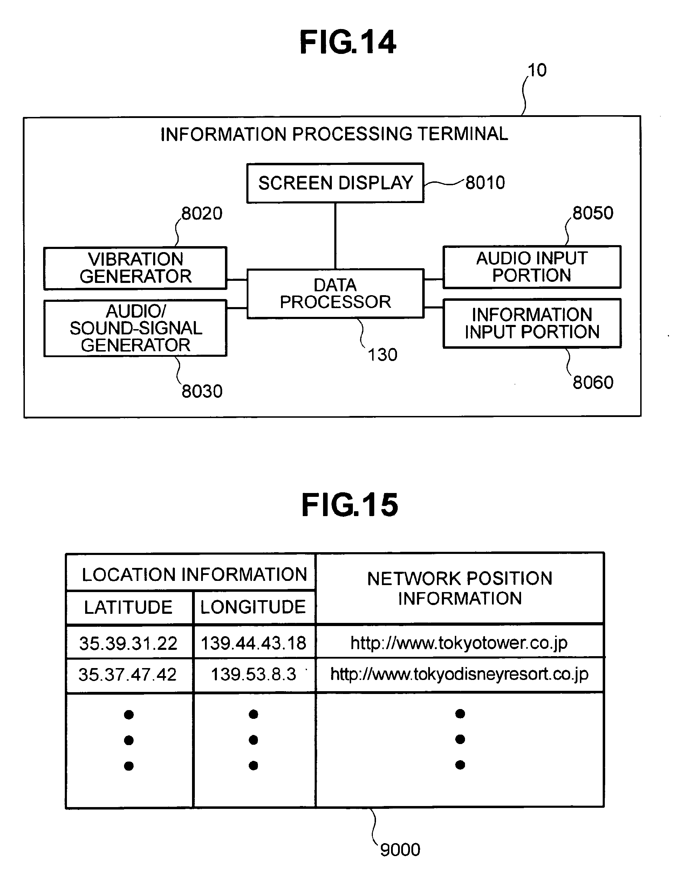

A first way is such that the user operates the terminal 10 to temporarily establish a connection to the information providing equipment 60 located nearby, through the communications network such as a wireless LAN, or by infrared communication, to obtain the network position information of the information providing equipment 60 from the equipment 60 itself. A second way, which is employed in a case where the network position information of the information providing equipment 60 is known to the user, is such that the user attaches the network position information to the data, e.g., an image data. A third way, which is employed in a case where the information providing equipment 60 is known to the user, is such that the user obtains the network position information of the information providing equipment 60, for instance, by utilizing a search server via the communications network 20, and attaches the network position information to the data, e.g. , an image data. A fourth way, which is available in a case where the information processing terminal 10 is equipped with a function to read a special identification mark (e.g., a two-dimensional code such as a barcode), is such that the location information and/or network position information of the information providing equipment 60 is obtained by reading the identification mark, and identifying the equipment 60 which corresponds to the identification mark as read, based on a predetermined relationship between respective identification marks and corresponding information providing equipments; since the information-providing-equipment identifier 90 can convert location information into network position information, in the case where only location information has been obtained, network position information is also available. This conversion is implemented as follows: A table stored in the information-providing-equipment identifier 90 in the form of a server placed in or connected to the communications network 20 is referred to, so that location information (in the form of data representative of degrees of latitude and longitude) of the information providing equipment 60 registered in the table is converted into network position information, which is returned to the information processing terminal 10. The table indicated above is shown in Fig. 15. In this table, URL is employed as the network position information, by way of example. However, other kinds of information may be employed as the network position information. Although the example shown in Fig. 15 is arranged to convert data of degrees of latitude and longitude into a URL, the latitude and longitude data may be first converted into a place name representative of a place including the geographic point specified by the degrees of latitude and longitude, and sequentially into the network position information which is associated with the place name. The thus obtained network position information is returned to the information processing terminal 10. In this case, the place represented by the place name is predefined as an area confined by particular degrees of longitude and latitude. Further, the server operating in the communications network 20 separately from the server 30 may be replaced by a function implemented on the server 30.

There will be next described processing implemented to obtain the information related to the positional information when storing the data.

The information processing terminal 10 operates to store the substantive data together with its positional information and other information such as date-and-time information indicative of the date and time when the data is created, in the server 30 via the communications network 20 or external memory device 80. The server 30 identifies the information providing equipment 60 based on the positional information received, and obtains the information related to the positional information, such as publicity. In the case where only location information is available as the received positional information, the server 30 uses the information providing equipment identifier 90 to obtain corresponding network position information, and then identifies the information providing equipment 60. It is noted that the date-and-time information is obtained from the information processing terminal 10. The information related to the positional information, (or simply "related information"), created data, positional information (i.e. location information and/or network position information), and date-and-time information are stored in the data storage device 40 with being correlated. It is noted that network position information of the server 30 has been set in the information processing terminal 10 beforehand by the user. Alternatively, the network position information of the server 30 may be set at any time desired.

There will be described the processing implemented when the data stored in the server 30 is viewed, by reference to Fig. 3.

The location information and/or network position information acquired when the data is created, and the information related to the positional information as acquired when the data is stored, are utilized or displayed when the substantive data is viewed. The viewing data may be implemented such that the user operates the operation terminal 50 to establish a communication with the server 30 via the communications network 20, so as to display the image or note stored in the server 30 on a display of the operation terminal 50 or a screen of a monitor or others which is connected to the operation terminal 50. The communication made here may be by a short range communication such as infrared communication or that via a wireless LAN, or may be through a wide range communications network such as the Internet. Or alternatively, the server 30 may be equipped with a user interface through which the user can directly access or view the data, without using the operation terminal 50. When the data is viewed, the relevant information providing equipment 60 may be identified on the basis of the location information or network position information, so as to access the equipment 60 to receive currently valid or latest information indicative of recommended things, merchandise information, advertising information or others, which are displayed with the substantive data to be viewed. For instance, the information obtained from the information providing equipment 60 includes: meteorological information indicative of, for example, weather and temperature; traffic information; particular information being rendered by the equipment 60 when accessed (e.g. information on an event presently held, or advertisement such as merchandise information); and future schedule. It is configured such that these information are selectable by the user as desired.

The information obtained at the time of creating the data, such as positional information and date-and-time information, and the information acquired when the data is stored, are used when the user searches some information stored in the data storage device 40.

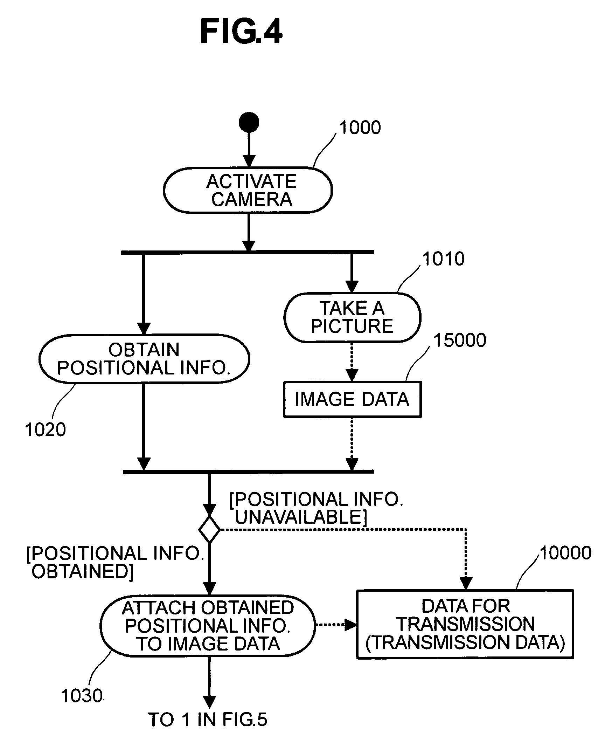

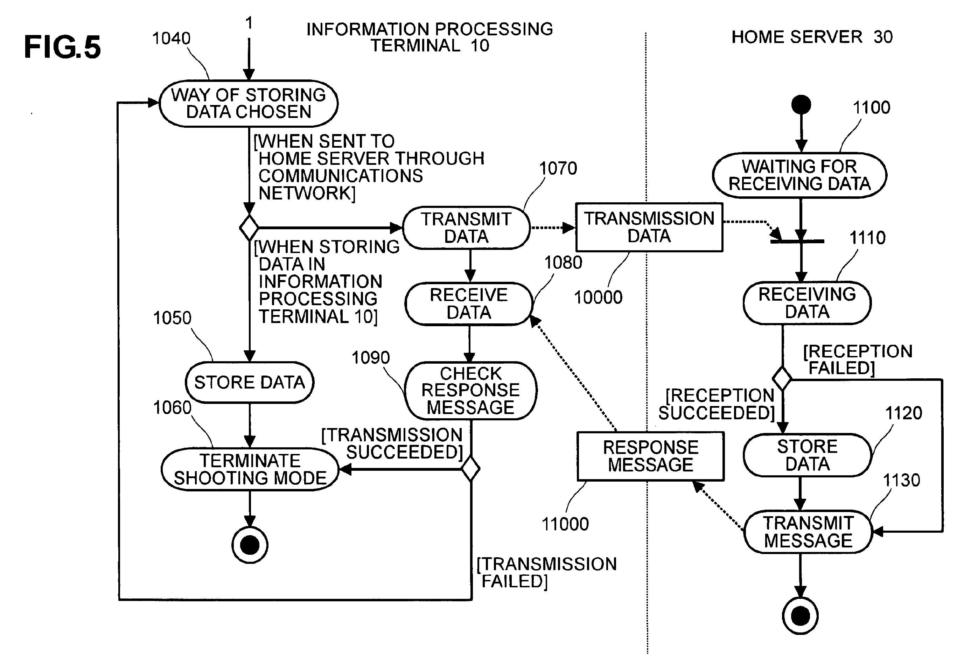

Fig. 4 shows processing performed in the information processing terminal 10 to obtain positional information, while Fig. 5 shows processing performed when the terminal 10 transmits data. There will be described a case where the information processing terminal 10 is a mobile phone and an image data of a picture taken by a built-in camera of the mobile phone is transmitted to the server 30, by way of example. The following processing can be employed in cases of taking a picture with devices other than such a built-in camera of the mobile phone, or, in cases of creating otherwise data.

First, a camera function of the information processing terminal 10 is activated (step 1000), and the user takes a picture with the camera to generate or create an image data 15000 (step 1010). The activating the camera function initiates obtaining location information or the like by means of the positional information obtaining portion 70, or obtaining network position information or the like by means of the receiver 100 (step 1020), which location or network position information is attached to the image data 15000 taken by the built-in camera (step 1030). In the example shown in Fig. 4, the activating the camera function initiates the obtaining the positional information. However, the timing of obtaining the positional information may be set as desired; turning on the mobile phone, or a particular operation before or after the taking the picture, may initiate the obtaining the positional information. Alternatively, it may be configured such that the positional information is repeatedly or periodically obtained, and the current one is attached to the image data when the image data is transmitted. In a case where the positional information could not be obtained, data 10000 for transmission or "transmission data 10000" mainly constituted by the image data does not include the positional information.

There will next be described by reference to Fig. 5 a way of storing in the server 30 the data to which information such as the positional information is attached. The information processing terminal 10 determines where to store the transmission data 10000 essentially consisting of the image data and the obtained positional information (step 1040). Where it is determined to store the transmission data 10000 in the information processing terminal 10 or the external memory device 80 connected to the information processing terminal 10, the data 10000 is stored accordingly (step 1050) and the processing is terminated (step 1060).

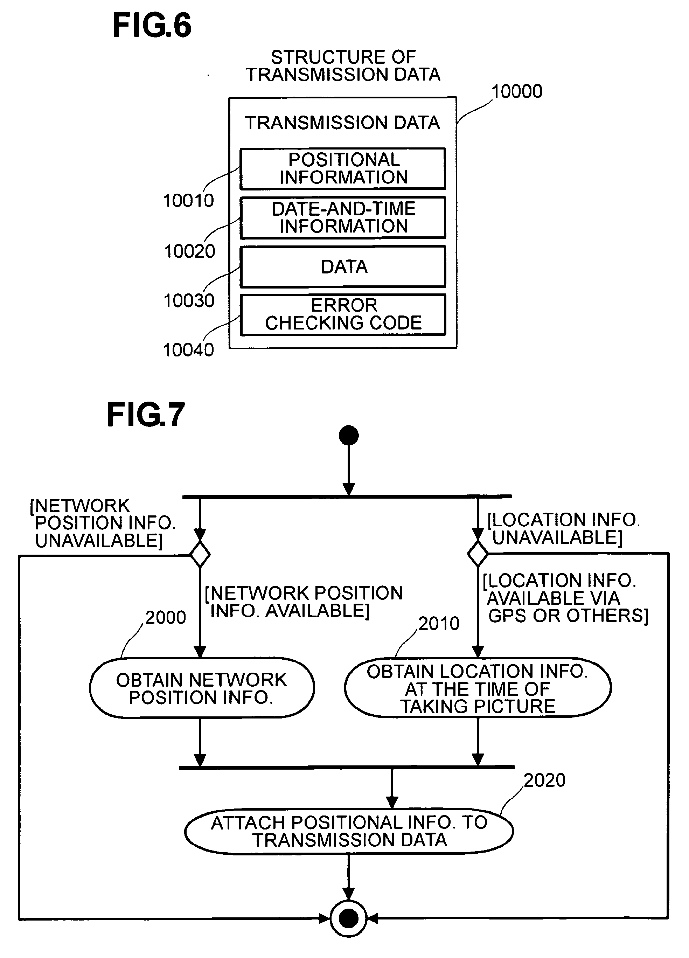

On the other hand, where it is determined to store the transmission data 10000 in the server 30, the data 10000 is sent to the server 30 through the communications network 20 (step 1070). The server 30 receives the transmission data 10000 and checks the content thereof to verify that no communication error has occurred (step 1110). When it is verified that the transmission data 10000 has been duly received with no error, the transmission data 10000 is stored in the data storage device 40 connected to the server 30 (step 1120). The determination whether the transmission data 10000 has been received with no error is made by utilizing an error checking code for detecting communication errors, as will be described later by reference to Fig. 6. Then, the fact that the transmission data 10000 has been stored in the server 30 is notified to the information processing terminal 10 by means of a response message 11000 (step 1130). In the case where there is detected any error in the transmission data 10000 the server 30 has received from the information processing terminal 10 in step 1110, the data 10000 is not stored and a response message 11000 which in this case indicates that the data transmission/reception has failed is sent to the terminal 10. In another case where the server 30 has not been able to receive the transmission data 10000, the same response message is sent to the terminal 10 (step 1130). The information processing terminal 10 verifies that the data it has sent out is duly received by the server 30 without any problems, by receiving the response message 11000 from the server 30 (steps 1080, 1090). In such a case, the processing is terminated (step 1060). On the other hand, where the data transmission/reception has failed, this is notified to the user by means of the response message 11000, step 1040 is implemented again to determine where to store the transmission data 10000, and the data 10000 is stored in either the server 30 or information processing terminal 10 (step 1050, 1120).

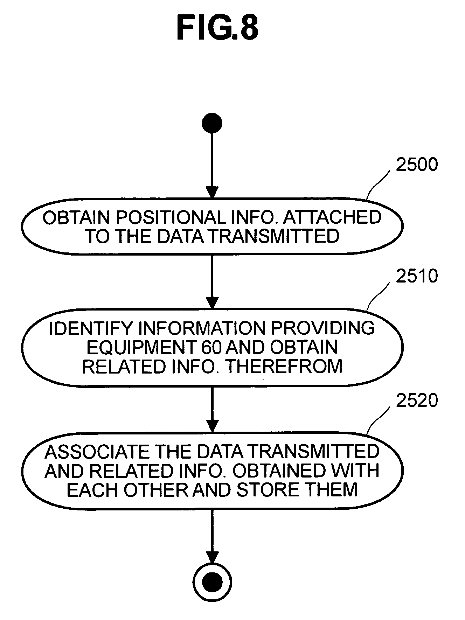

In the case where the transmission data 10000 is transmitted to the server 30, the data 10000 is stored in the data storage device 40. In the other case where the transmission data 10000 is stored in a storage area in the information processing terminal 10 or in the external memory device 80, the transmission data 10000 may be forwarded to the server 30 and in turn to the data storage device 40 at a later time. This is for allowing the server 30 to manage and search the data 10000. Since a mobile device such as a mobile phone typically has a relatively limited storage area, the information processing terminal 10 of the present embodiment takes the form of a mobile phone, transfers the data 10000 to the server 30. That is, in cases where the mobile device or others serving as the information processing terminal 10 has a sufficient memory capacity, the mobile device or others may not transfer the data 10000 to the server 30. Steps to obtain the information related to the positional information implemented when the data is stored will be illustrated later by reference to Fig. 8.

Fig. 6 shows structure of the transmission data 10000. In this embodiment, the data 10000 consists of four kinds of information, namely, positional information 10010, date-and-time information 10020, a substantive data 10030, and an error checking code 10040, by way of example, and thus constructed transmission data 10000 is sent as an individual transmission data. The positional information 10010 and date-and-time information 10020 are information required to be obtained when the data 10030 is stored (that is, when the information related to the positional information is obtained) and when the data 10030 is viewed, too. Hence, the information 10010, 10020, 10030 may be sent to the server 30 anywise as long as it can be known that these information 10010, 10020, 10030 are correlated. Further, the way of storing the information 10010-10030 may also be anywise as long as the information 10010-10030 and information indicating that these information 10010-10030 correlate with each other are held by the server 30. Type of the data 10030 varies depending upon the application utilized at the information processing terminal 10 when creating the data 10030. In the foregoing example, the image data 15000 created with the camera corresponds to the data 10030. The error checking code 10040 is information utilized for correcting or detecting the communication errors. To enable the error checking code to detect or correct the communication errors, a redundant data is added to the data 10030 depending on the content communicated. By the use of the redundant data, the communication errors are detected, if any, and are corrected if possible. A simple way of providing the redundant data is, for instance, to add a checksum or CRC code to the data 10030.

Fig. 7 shows processing implemented in step 1020, in which the positional information is obtained in the example where the camera takes a picture.

There are two ways to obtain the positional information; one of which uses the positional information transmitter such as the GPS and a base station of mobile phone, and the other of which uses a short range wireless network to obtain the positional information from the information providing equipment. Fig. 7 shows a case where the positional information is obtained in both the ways. However, it is not essential to obtain both of the network position information and location information as the positional information, but obtaining only one of the two types of positional information suffices to exploit functions provided by this embodiment. One of the above-indicated means or ways for obtaining the positional information is chosen, depending upon the current communication circumstances involving capability of establishing a communication with the GPS or base station, and availability of the short range communications via a wireless LAN or others. Alternatively, the user may set up beforehand to use one of the two means or ways for obtaining the positional information, or to use both of them. In a case where the positional information is obtained through the positional information obtaining portion 70, the GPS or base station is utilized to obtain the location information at the time of taking the picture (step 2010). The network position information can be obtained in two ways: connecting the receiver 100 to the information providing equipment 60 through a short range wireless communications network, such as a wireless LAN or of infrared communication, to obtain the network position information from the equipment 60; and reading an RFID tag, or a barcode or other two-dimensional codes, which represents the network position information (step 2000). When one or both types of the positional information has been obtained, the positional information is attached to the transmission data (step 2020). When any of the positional information is available, only the image data is transmitted to the server 30 (step 1030).

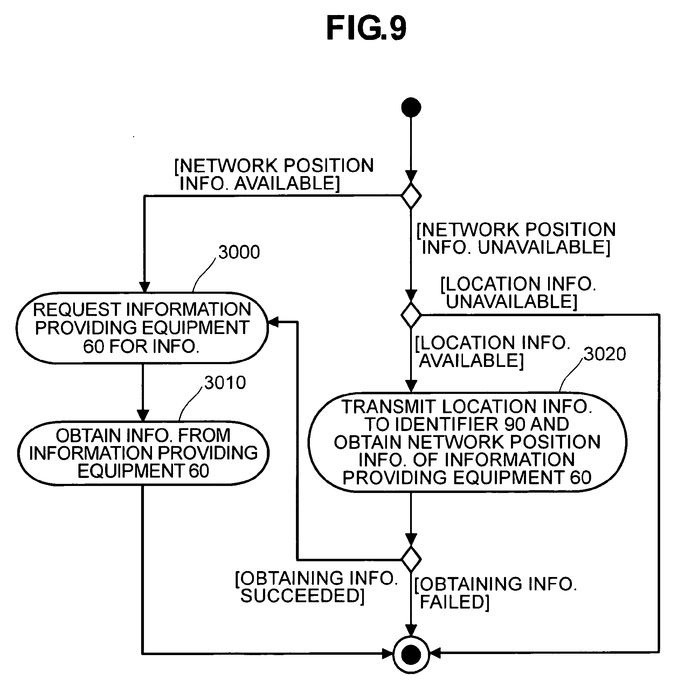

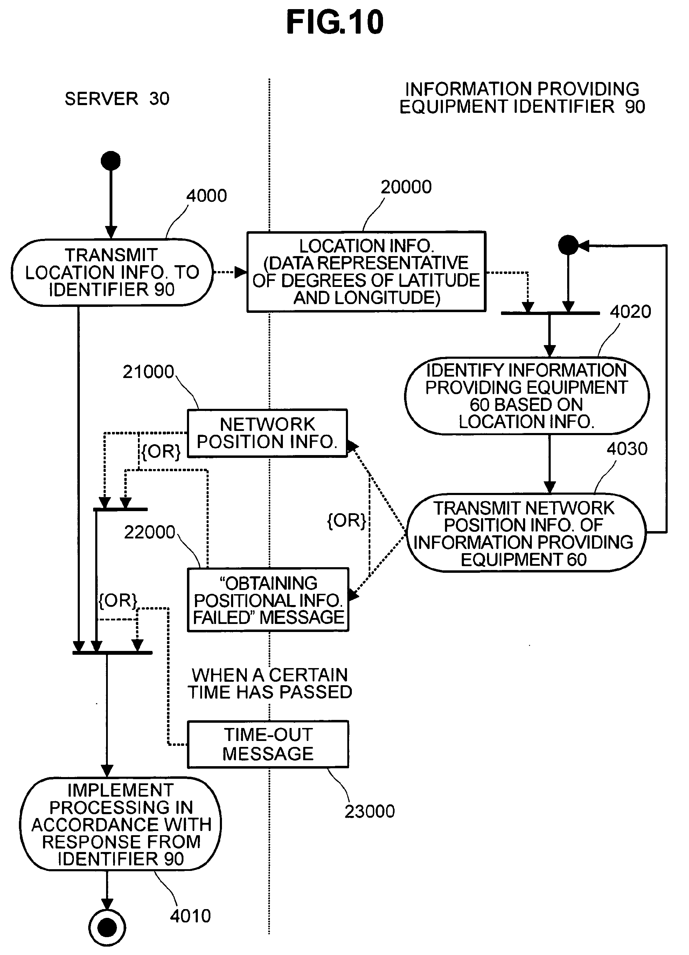

Fig. 8 is a diagram illustrating details of step 1120 in Fig. 5, and shows a way of obtaining the information related to the positional information. Initially, the server 30 which have received the transmission data 10000 takes out the positional information included in the data 10000 (step 2500). Based on the positional information is identified the information providing equipment 60, from which information related to the positional information, or, information related to the position at which the data has been created is acquired (step 2510). The thus acquired information related to the positional information is stored in the data storage device 40 with being associated or correlated with the transmission data 10000 (step 2520). The processing for identifying the information providing equipment 60 will now be described by reference to Figs. 9 and 10. This processing may be implemented in storing the created data, and in viewing the data.

Fig. 9 shows how the information related to the positional information is acquired from the information providing equipment 60, while Fig. 10 shows how the network position information of the equipment 60 is obtained based on the location information.

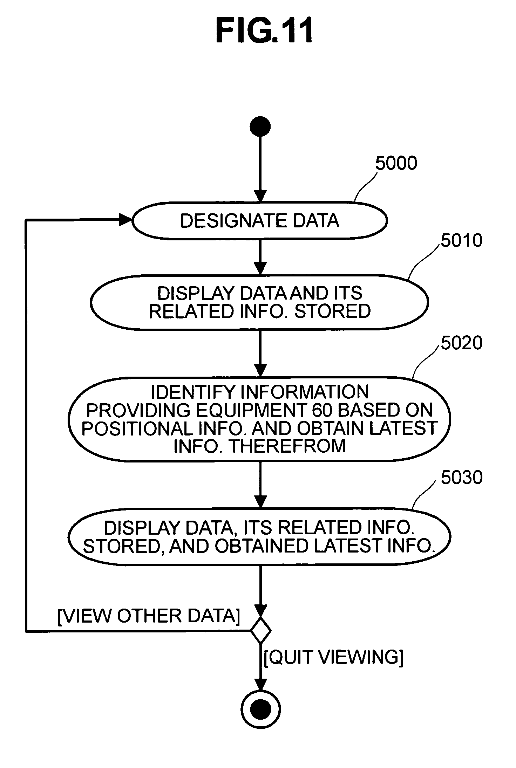

In Fig. 9 is illustrated a way of identifying the information providing equipment 60 providing information on the position at which the data is created, to acquire the information related to the positional information from the equipment 60. The processing shown in Fig. 9 is necessary to render the information related to the positional information, and is implemented when the data is stored (step 2510) and viewed (step 5030 in Fig. 11). Firstly, the server 30 verifies that the transmission data 10000 the server 30 has just received, or the transmission data 10000 stored in the data storage device 40, includes network position information (e.g. , a URL) of the information providing equipment 60. In a case where the network position information is included in the data 10000 in question, the corresponding information providing equipment 60 can be identified in the communications network 20, and accordingly information related to the positional information is acquired from the information providing equipment 60 on the basis of the network position information (steps 3010, 3020). For instance, where the information providing equipment 60 is a school, information such as an event calendar of the school is acquired.

On the other hand, where the transmission data 10000 does not include network position information, but location information (data indicative of longitude and latitude of the information providing equipment 60) is included therein, the location information is transferred to the information providing equipment identifier 90, to obtain network position information of the equipment 60 therefrom (step 3020). Details of this step 3020 will be described by reference to Fig. 10.

In a case where network position information can not be obtained on the basis of the location information, or, where network position information is not included in the transmission data 10000, identification of the information providing equipment 60 is not allowed and thus the information related to positional information is not acquirable, making it impossible to provide services utilizing such information.

Fig. 10 illustrates how network position information is obtained based on the location information in step 3020 as shown in Fig. 9.

The information providing equipment identifier 90 identifies the network position information of the information providing equipment 60, which is returned to the server 30.

When the data 10030 stored in the data storage device 40 is displayed (step 3010), location information 20000 stored in association with the data 10030 is firstly looked up (step 3020). The server 30 transmits the location information 20000 to the information-providing-equipment identifier 90 (step 4000). The information-providing-equipment identifier 90 which has received the location information 20000 identifies the information providing equipment 60 on the basis of the data indicative of the degrees of longitude and latitude stored as the location information 20000 (step 4020). Converting location information into network position information is performed by the information-providing-equipment identifier 90 such that the identifier 90 accepts a longitude-and-latitude data as an input and returns network position information. In practice, a conversion table, in which a particular pair of degrees of latitude and longitude is correlated with a unique network position data or information, is used to provide the above-described function. Since it imposes too much load on the information-providing-equipment identifier 90 to centralize management of the entirety of such a table, the data of the table may be distributed to and managed at a plurality of devices. In this case, multiple servers each providing the function identical with that of the information-providing-equipment identifier 90 are located in or connected to the communications network 20. Further, the information converting function may be implemented on the server 30. In this case, by using a Web service or the like, it is made possible to obtain the network position information without the server 30. Then, the network position information 21000 (such as a URL) which specifies a unique information providing equipment 60 in the communications network 20 is returned to the server 30 (step 4030). When the network position information can not be obtained, a message indicating that the acquisition of the network position information has failed is transmitted to the server 30 (step 4030). The thus obtained network position information permits the server 30 to make a communication with the information providing equipment 60 (step 4010), and accordingly enables the user to view or utilize the data 10030 and information related to the positional information relevant to the data 10030 (step 3040). When the response message is not returned from the information-providing-equipment identifier 90, the server 30 issues a time-out message 23000 for itself, and implements suitable processing for the case where the network position information is unavailable. In this case, the information providing equipment 60 can not be identified, making it impossible to display the information related to the positional information.

According to the above-described arrangement, even when communication with the information providing equipment 60 is impossible when creating the data 10030 (such as taking an image or making a note), additional information related to the position at which the data 10030 is created can be obtained, based on the location information acquirable by means of the positional information obtaining portion 70. In a case where the information providing equipment 60 can be identified as well as the network position information of the equipment 60 is acquirable when the data is created, or, where the server 30 has a function to identify the information providing equipment 60 (i.e., the server 30 has the function the information providing equipment identifier 90 provides), the information- providing-equipment identifier 90 is unnecessary. The information- providing-equipment identifier 90 may be configured to have the function to return network position information for identifying information providing equipment 60, as well as a function to return other useful information acquirable based on location information. For instance, the identifier 90 may convert latitude and longitude data into a real positional information (address) which is returned to the server 30.

Fig. 11 is a diagram which provides further details of Fig. 3 and illustrates an information obtaining method for allowing the user to view the data 10030 stored in the data storage device 40 using the operation terminal 50 or others. Initially, the user operates the server 30 via the operation terminal 50 to designate the data the user desires to view (step 5000). The designated data 10030 and related information as obtained when storing the transmission data 10000 is displayed on the operation terminal 50, or a monitor or others connected to the operation terminal 50 (step 5010). At the time of this display, the server 30 communicates with the information providing equipment 60, in checking whether there is any updated or latest information associated with the network position information and/or location information (step 5020). This checking is performed by implementing processing as shown in Figs. 9 and 10. The latest information thus acquired from the information providing equipment 60 is displayed and rendered to the user in the same way as the "related information" stored in the data storage device 40 (step 5030).

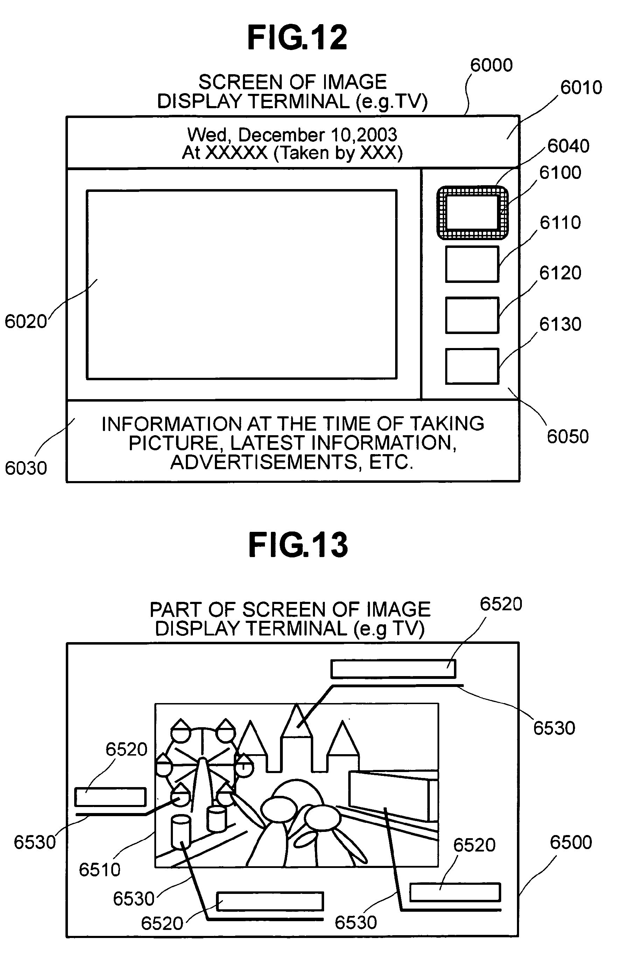

Fig. 12 shows an example of display of the data 10030 and its related information. Reference numeral 6000 denotes a display screen of the operation terminal 50 or the monitor or others connected to the operation terminal 50. Reference numeral 6010 denotes a portion for indicating information such as the date and time of taking the picture, person who has taken the picture, position at which the picture has been taken, etc. , which is stored together with the created data. The person who took the picture is identifiable based on a data stored in the information processing terminal 10, user information such as of login record, or a log of operations of the information processing terminal 10, while the position at which the picture has been taken is identifiable based on the location information. These information are not displayed if not available. Reference numeral 6020 denotes a main area for displaying the designated data. Reference numeral 6050 denotes an area for displaying other data held in the data storage device 40; for instance, thumbnails of the respective ones of the other data are provided in the area 6050. Reference numerals 6100-6130 denote the thumbnails as actually presented. The thumbnails serves as a GUI element for designating a data to be enlarged or displayed in a full scale. Reference numeral 6030 denotes a portion for displaying the related information pertaining to the position at which the data displayed in the main area 6020 has been taken. The information presented in the portion 6030 may be, for instance, the latest information and advertisements related to the position at which the picture has been taken, and a shutter speed in the case where the picture has been taken with a digital camera. When the amount of the related information is too large to be presented within the portion 6030, the information is presented in a scroll pane.

This specific example is for displaying an image data taken by a camera, and indicates a way of displaying a substantive content (e.g., image data) as a primarily displayed element together with its related information. In practice, other ways of display may be employed, as long as the stored data and its related information can be presented to the user in a manner which makes it recognizable that they are correlated. In a case where information related to the image data takes other forms than visual information, e.g., music or sounds, it is not necessary to separately provide the display portion 6030 as shown in Fig. 12. In this case, merely the image data is displayed and its related information is outputted from a speaker, is communicated by vibrations or is outputted by other means. In such a case, the information processing terminal 10 is constructed as indicated by a block diagram of Fig. 14 in terms of function. On a screen display 8010 is displayed an image data such as that exemplified in Fig. 12. Depending upon content of the image data, the screen display 8010, a vibration generator 8020, and an audio/sound-signal generator 8030 are used to render information related to the image data. To allow the user to input data in reaction to the content displayed on the screen display 8010 or other information rendered, the information processing terminal 10 is equipped with an audio input portion 8050 such as a microphone, and an information input portion 8060 such as keys, for instance. Processing and control of these information are performed by the data processor 130.

It is noted that the above-described construction or configuration of the information processing terminal 10 may be embodied by using a CPU and a memory of a computer, and other LSIs, as hardware, and a program loaded on a memory, as software. However, Fig. 14 illustrates the configuration of the terminal 10 by using functional blocks each embodied by combination of at least one of these elements. It is to be understood that the functional blocks can be embodied in various forms using only hardware or software or a combination of hardware and software, which will occur to those skilled in the art.

Fig. 13 shows another example of display of a data. Reference numerals 6500 and 6510 denote a display area in a data display device, and a data displayed therein, respectively. Hereinbelow will be described a case where the data 6510 is a picture.

The data 6510 or picture has been taken in an amusement park and images of various buildings or attractions are captured in the picture. By the method according to the embodiment of the invention, information on the position at which the picture is taken is acquirable and displayable at the time of the image taking. Thus, when creating the data, information on the buildings and attractions are obtained, and each piece 6520 of the information on a building or attraction is displayed close to a lead line 6530 extending from the corresponding building or attraction in the picture or image. By employing this way of displaying data, it is made possible to display the buildings and attractions and information thereon at the same time.

In a case where the information providing equipment 60 has a function to measure a distance between the user and the building or attraction an image of which is taken by the user, or, to identify a positional relationship between the user and the building or attraction as an photographic object, it is made possible to display a scene as viewed at the same location in the same perspective, of several years or decades later; for instance, where the picture of interest is one taken in a leisure land such as amusement park, a history of changes in buildings and attractions can be viewed.

## Claims

1. A data management system, comprising:
an information processing terminal which obtains a data;
a data storage device which stores and manages the data; and
an information providing means which transmits network position information as a positional information relevant to a position of the information processing terminal in a network, in response to a positional information acquisition request sent from the information processing terminal,
wherein the information processing terminal sends the positional information acquisition request when the data is created, receives the network position information from the information providing means, and stores the data and the network position information in the data storage device, associating the data and the network position information with each other, and
wherein the data storage device accesses the information providing means corresponding to the network position information when the information processing terminal accesses the data, to obtain information currently rendered by the information providing means, so that the information processing terminal displays the rendered information.

2. The system of claim 1, wherein the data storage device accesses the information providing means corresponding to the network position information when storing the data, obtains information currently rendered by the information providing means, and stores the data and the rendered information, associating the data and the rendered information with each other.

3. The system of claim 1, wherein the information processing terminal has a positional information obtaining portion which obtains, when the data is created, location information indicative of a position at which the data is created, from a positional-information obtaining equipment, and transmits the location information to an information-providing-equipment identifier so as to acquire network position information relevant to the location information from the information-providing-equipment identifier.

4. The system of claim 3, wherein the information-providing-equipment identifier has a table defining a correspondence relationship among a data indicative of degrees of latitude and longitude of the position at which the data is created, a place name assigned to an area including the position, and network position information pertaining to the area name, and converts between the location information and the network position information by reference to the table.

5. The system of claim 1, wherein the data storage device is incorporated in the information processing terminal.

6. An information processing terminal having a data storage device, comprising:
a data creating portion which is operable to create a data; and
a transceiver portion communicating with information providing means which renders information related to the data,
the information processing terminal
(i) sending, when creating the data, a positional information acquisition request to obtain network position information of the information providing means, and storing the data and the network position information in the data storage device, associating the data and the network position information with each other, and
(ii) acquiring, when displaying the data, information currently rendered by the information providing means corresponding to the network position information and displaying the data and the acquired information related to the data.

7. The subject matter of claim 1 or 6, wherein the network position information is transmitted from an information providing equipment located within a predetermined range from a position at which the data is created.

8. The terminal of claim 6, having a positional information obtaining portion which obtains, when the data is created, location information indicative of a position at which the data is created, from a positional-information obtaining equipment, the information processing terminal transmitting the location information to an information-providing-equipment identifier so as to acquire network position information relevant to the location information from the information-providing-equipment identifier.

9. The subject matter of claim 3 or 8, wherein the location information is a data indicative of degrees of latitude and longitude of the position at which the data is created.

10. The subject matter of claim 1 or 6, wherein the network position information is a URI.

11. A data management device having a data storage device which stores a data obtained from an information processing terminal connected to the data management device,
which is connected to an information providing means which transmits network position information as a positional information relevant to the position of the information processing terminal in a network, in response to a positional information acquisition request sent from the information processing terminal;
which obtains the network position information from the information providing means in response to the positional information acquisition request sent from the information processing terminal, and stores the data and the network position information in the data storage device, associating the data and the network position information with each other; and
which accesses the information providing means corresponding to the network position information when the information processing terminal accesses the data, to obtain information currently rendered by the information providing means, and transmits the rendered information to the information processing terminal.

12. The device of claim 11, wherein the data storage device accesses the information providing means corresponding to the network position information when storing the data in the data storage device, to acquire information currently rendered by the information providing means and store the data and the rendered information, associating the data and the rendered information with each other.
